# NEW EUROPEAN PATENT SPECIFICATION

(11) **EP 2 420 749 B2**
(45) Date of publication and mention of the opposition decision: **26.08.2020**
(45) Mention of the grant of the patent: 28.06.2017
(21) Application number: 11006777.4
(22) Date of filing: 19.08.2011
(51) Int. Cl.: F24F 5/00, F24D 3/16

(54) **Climate control for a building**
Klimatisierung für Anwendung in einer Zwischendecke eines Raums in einem Gebäude
Climatisation pour application dans un plafond suspendu d'espace d'un bâtiment

(30) Priority: 20.08.2010 BE 201000497
(43) Date of publication of application: 22.02.2012
(73) Proprietor: INTERALU, naamloze vennootschap, 2610 Wilrijk (BE)
(72) Inventor: Schrauwen, Anthony, 2900 Schoten (BE)
(74) Representative: Arnold & Siedsma

(56) References cited:
- EP-A2- 0 733 865
- EP-B1- 0 548 480
- DE-A1- 4 318 833
- DE-U1- 9 401 030
- DE-U1-202006 002 111
- GB-A- 2 262 548

## Description

The present invention relates to a climate control system for application in a false ceiling of a room in a building, according to the preamble of claim 1.

More specifically the present invention relates to such a climate control system that is equipped with pipes in which a fluid can flow to cool and/or heat the room.

Climate control systems of the aforementioned type are of course already known. EP0548480 discloses an example of such a climate control system.

In these known climate control systems the false ceiling is generally formed by mounting panels on a supporting structure adjoining one another.

On the non-visible side of the false ceiling, the panels have a pipe section that is intended for an aforementioned fluid and which is normally placed on the panel in a zigzag pattern.

A first disadvantage of such known climate control systems for application in a false ceiling is that each panel of the false ceiling generally has its own pipe section that has to be connected to a pipe section of an adjoining panel.

Many connectors are needed for this, and first and foremost these connectors are expensive.

Moreover each connection between the pipe sections realised with connectors constitutes a certain increased risk of leaks occurring.

Furthermore, connecting the various pipe sections together is also a difficult task and requires a lot of time and dexterity, such that the cost of installation can also be rather high.

An even more important matter is the fact that the known climate control systems for false ceilings are open to improvement with regard to their energy consumption.

Indeed, there is a trend in architecture to limit energy consumption as much as possible, for example by insulating buildings well, as is typically done in a passive home for example.

To cool a building with as little energy consumption as possible, there is an additional technique, whereby the heat capacity of the building structure itself is also utilised.

This technique takes advantage of the temperature difference that occurs outside the building during the day.

More specifically, during the day it is generally warmer than at night, whereby the heat that is stored in the building during the day is again released at night by applying so-called night ventilation, which consists of guiding the colder outside air at night through the building to cool the structure of the building.

Consequently by the morning the building has cooled sufficiently to be gradually heated up again during the day.

As the heat capacity of the building is much greater than the heat capacity of air, the heating of a room to be cooled inside the building will be much slower during the day through the application of this technique of night ventilation.

Consequently less energy will be demanded from a climate control system to cool the room during the day.

The great disadvantage of known climate control systems for false ceilings is, however, that due to their closed form, false ceilings form as it were a screen between the building itself and the room to be cooled and/or heated, such that the application of the aforementioned technique is impossible.

Indeed, in such a case the air of the room to be cooled and/or heated does not contact, or barely contacts, the building, such that the heat capacity of this building cannot in fact be utilised, for example to store heat from the air of the room in the structure of the building.

Another existing technique is 'concrete core activation'.

In this technique cooling and/or heating pipes are put in the concrete of the floors of a building, such that in this case the mass of the building itself participates in the cooling and/or heating process.

However, a disadvantage of concrete core activation is that the pipes have to be embedded in the concrete itself, such that the installation of the cooling and/or heating system of the building has to be taken into account at a very early stage of the construction of the building.

Moreover the installation of such pipes in concrete is a reasonably difficult or complicated task.

Moreover, it is an almost impossible task to implement subsequent modifications after the pipes have been installed in the concrete.

Moreover this technique of concrete core activation has the disadvantage that a false ceiling cannot be installed, such that other pipes and cables, such as electricity cables and similar, are difficult to conceal. A climate control system for application in a false ceiling of a room in a building according to the preamble of claim 1 is known from document DE 94 01 030 U1. The purpose of the present invention is to provide a solution to the aforementioned and any other disadvantages.

To this end the present invention concerns a climate control system for application in a false ceiling of a room in a building, having the features of claim 1. This climate control system is equipped with pipes in which a fluid can flow to cool and/or heat the room, whereby the false ceiling is an open false ceiling that consists of ceiling profiles that are fitted in parallel next to one another transversely on supporting profiles of a supporting structure, whereby an opening is left between successive ceiling profiles each time, whereby these ceiling profiles have a U-shaped cross-section formed by a base that connects two parallel sidewalls of the ceiling profile together, whereby the pipes of the climate control system are fitted between the sidewalls of the ceiling profiles, except at the places where such a pipe passes from a first ceiling profile to a second ceiling profile, and these ceiling profiles are situated at a certain lateral distance from one another, whereby the climate control system has clamping means for clamping a pipe to a supporting profile after which the pipe can be covered by ceiling profiles and whereby the same continuous pipe is fitted in a number of ceiling profiles of the open ceiling.

A great advantage of a climate control system according to the invention is that it can be applied in an open false ceiling,such that the room to be cooled and/or heated is in fact delimited by the structure of the building and can move freely between the space under the open false ceiling and the space above the open false ceiling.

In this way the air of the room to be cooled and/or heated comes into contact with the structure of the building and thus the heat capacity of the building structure itself can be utilised.

Consequently, in contrast to the known climate control systems,such a climate control system according to the invention is extremely suitable for the application of so-called night ventilation, which can yield a considerable energy saving.

A further advantage of a climate control system according to the invention consists of it being built from simple elements, more specifically U-shaped ceiling profiles that are placed on a supporting structure, whereby the pipes of the climate control system are contained in the ceiling profiles so that the pipes are hidden from view.

Such U-shaped profiles are readily available, and as a result of its simple structure the installation of a climate control system according to the invention is simple and cheaper than with known climate control systems.

A further big advantage of a climate control system according to invention is that, compared to known climate control systems, substantially larger pipe lengths can be installed in one go in a number of ceiling profiles without having to use connectors or couplings.

As a result, up to 95% fewer hydraulic couplings are needed in a building.

This means an enormous saving compared to the usual cost of connectors, and furthermore the installation can proceed more smoothly, which further reduces the cost of the installation.

Moreover, pipe sections that are connected together by means of connectors are weak places in the system where the risk of leaks is greater than elsewhere, and as far fewer connectors are needed in such a climate control system according to this embodiment than with the known climate control systems, there are also fewer leak-sensitive points in the installation and the risk of leaks occurring is lower than with known climate control systems.

A further advantage of a climate control system according to the invention is that it is equipped with clamping means for directly clamping a pipe to a supporting profile, whereby a continuous pipe can first be secured to a number of supporting profiles in a very simple way, after which the fitted pipe can be covered by a U-shaped ceiling profile.

It is clear that as a result of this, it is possible to install a single continuous pipe in a number of ceiling profiles, while the installation is also greatly simplified compared to the known installation methods where a pipe is first secured in a ceiling profile, after which the ceiling profile is suspended from the supporting profiles and finally the pipe is connected to the pipes in the adjacent ceiling profiles by means of connectors or couplings.

According to the invention a continuous pipe is preferably fitted in successive loops in the ceiling profiles, whereby such a loop is at least formed by two parallel pipe sections fitted in a pair of ceiling profiles that are at least a lateral distance from one another that is greater than the distance between two ceiling profiles situated next to one another in the ceiling; an interjacent pipe section that connects these two parallel pipe sections and makes an angle of 180°, and whereby at least one loop has a pipe section that forms a loop end and which also makes a 180° bend for connection to a subsequent loop.

Preferably, according to the invention, in each case successive loops are displaced with respect to one another over a lateral distance that corresponds to the distance between adjacent ceiling profiles or a multiple thereof.

An advantage of a climate control system according to these last-mentioned embodiments is that between the parallel pipe sections of the loops there are a number of ceiling profiles in each case and that these parallel pipe sections are located at a substantial distance from one another, such that the interjacent pipe section can make an angle of 180° without this interjacent pipe section having to be bent with too small a bending radius.

This provides the advantage that pipes can be used that do not need to be too flexible, and which thus also have greater strength.

According to a further preferred embodiment of a climate control system according to the invention, the clamping means for clamping a pipe to the supporting profile has a practically semi-cylindrical pipe section for clamping a pipe in the clamping means.

Moreover a supporting profile of the climate control system preferably has a groove or hole or number of grooves or holes, and one end of the clamping means is equipped with a pair of hooks opposite one another to snap the clamping means into an aforementioned groove or hole of the supporting profile or a pair of grooves or holes of the supporting profile.

A climate control system according to the invention according to these last embodiments provides the advantage that the pipes can first be easily clamped to the supporting structure with the clamping means, whereby these pipes can then be concealed from view by affixing the U-shaped ceiling profiles over the pipes.

This is a particularly practical way of proceeding and as a result very large rooms can be equipped with an open false ceiling with a climate control system integrated in it.

This also means that such a climate control system according to this embodiment can be installed very economically.

In order to be able to easily fit ceiling profiles over the pipes, according to the invention the side walls of the ceiling profiles, preferably at their free edges, are folded somewhat inwards to form a pair of hooks oriented towards one another that extend over the length of the ceiling profile, and a supporting profile of the supporting structure preferably has a pair of projections that are complementary to the aforementioned hooks, in order to be able to hook a ceiling profile onto a supporting profile. According to another preferred embodiment of a climate control system according to the invention, sound insulation of acoustic damping material is fitted above the open false ceiling at regular distances from one another, in such a way that a convective flow between the ceiling profiles can take place unimpeded and the air above the ceiling profiles can be flushed with air originating from outside the building.

This last embodiment of a climate control system provides very many benefits, as one single system provides a climate management solution that is very open and thus energy-efficient, whereby the installation is easy to realise and good acoustics are also obtained.

The fact that all these factors (energy efficiency, simplicity of the installation, openness of the installation and good acoustics) can be positively influenced with one and the same climate control system, is thus one of the most important strengths, if not the most important strength of the climate control system according to the invention.

According to the currently available systems, the combination of an open ceiling and good acoustics, for example, would require a combination of a number of systems. More specifically, a sound damping system that first has to be installed combined with an open ceiling that can then be fitted afterwards.

The current techniques are also completely unsuitable for the combination of all the above-mentioned factors, and the combination of a number of systems would lead to economically unjustified solutions.

According to a preferred embodiment of a climate control system according to the invention, the open false ceiling is suspended from the ceiling of the room in the building and the sound insulation consists of rectangular panels or mats that are placed with one side edge between the side walls of the ceiling profile concerned, whereby preferably the opposite side edge of the panels or mats extend a certain distance from the ceiling of the room.

In such an embodiment of a climate control system according to the invention, the acoustic damping material is integrated in a very simple way, whereby the fitting or installation of the panels or mats requires very little effort and the distribution of them over the ceiling can be easily adapted according to needs.

Moreover, in the aforementioned way it can be ensured that the open nature of the open false ceiling is preserved even with sound damping material, whereby the ratio between the open parts and closed parts of the false ceiling are at least 40%.

A further advantage of the integration of acoustic damping material in the climate control system is that no additional suspension points have to be provided in order to install the sound damping material, which is indeed the case with existing systems.

This again means an enormous time saving, as well as a great economic benefit.

According to an even more preferable embodiment of a climate control system according to the invention, the sound insulation consists of semirigid rockwool mats that are packed in a PE foil and which are fitted in a ceiling profile without a reinforcing frame.

Such rockwool mats have very good sound absorbing properties and also satisfy the strict fire safety standards.

In order to obtain optimum connection of the sound damping material to a ceiling profile concerned, preferably the panels or mats of sound insulation are clamped in the ceiling profile concerned between the aforementioned pair of hooks oriented towards one another that extend over the length of the ceiling profile.

It is clear that this embodiment is particularly beneficial for the application of rockwool mats, as due to their compressibility they are easily fitted between the pair of hooks oriented to one another, while adequate clamping of such a rockwool mat in the ceiling profile concerned is obtained without problem.

Lighting can be easily integrated into a climate control system according to the invention.

Another advantage of a climate control system according to the invention is that a wall can be placed at any desired position below an installed open false ceiling that the climate control system forms part of, and possibly a vertical acoustic barrier above the false ceiling, for example to form separate rooms, without harming the open nature of the open false ceiling in each room separately.

In this way an open false ceiling can easily be installed beforehand over large parts of a building in which a climate control system according to the invention is installed, and in which lighting points and acoustic sound damping materials are integrated for example, whereby the underlying space can be subsequently divided into smaller units to form separate rooms or offices or similar.

With the intention of better showing the characteristics of the invention, a preferred embodiment of a climate control system according to the invention is described hereinafter by way of an example, without any limiting nature, with reference to the accompanying drawings, wherein:
figure 1 shows a cross-section of a climate control system according to the invention that is installed as an open false ceiling in a building;
figures 2 and 3 show, on a somewhat larger scale, a cross-section and perspective respectively of some parts of the climate control system of figure 1;
figure 4 shows a view of the non-visible topside of the false ceiling of figure 1;
figure 5 shows a single loop of this topside of the ceiling indicated by F5 in figure 4, and this loop is formed by a pipe of the climate control system;
figure 6 shows a cross-section according to the line VI-VI of figure 4 on a larger scale;
figure 7 shows in perspective, on a larger scale, the clamping means that are indicated by F7 in figure 6;
Figures 8 and 9 respectively show a front view and a side view of the clamping means of figure 7, respectively according to the arrows F8 and F9;
figure 10 shows a variant of the clamping means according to figure 8; and,
figure 11 shows an enlargement of the part of figure 1 that is indicated by F11.

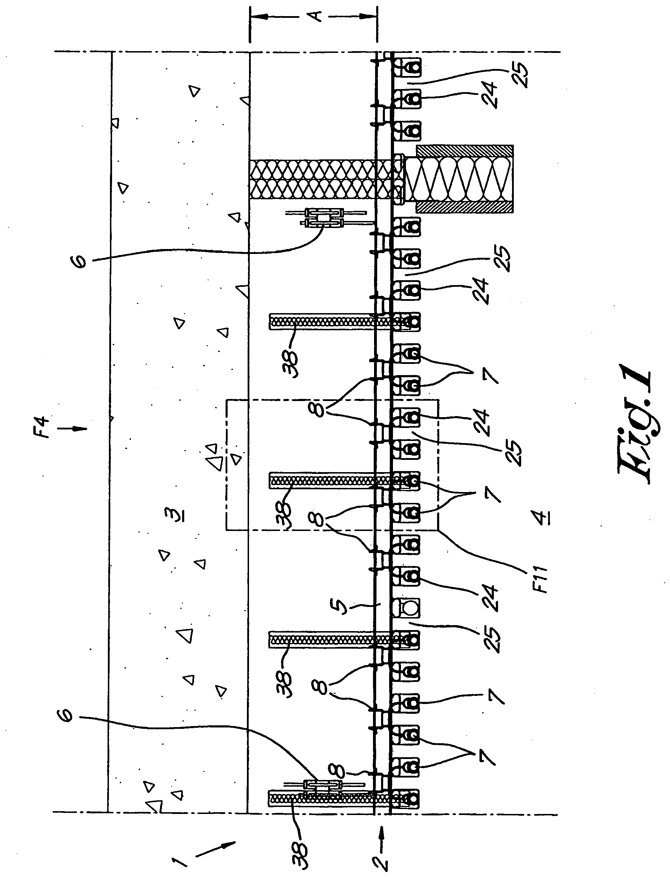

The climate control system 1 according to the invention shown in figure 1 is constructed as an open false ceiling 2 that is suspended from a concrete ceiling 3 of a room 4 to be cooled in a building.

As can be derived from figures 1 to 4, the open false ceiling 2 contains a supporting structure consisting of supporting profiles 5 that are fitted at a distance A below the concrete ceiling 3 using so-called fast hangers 6 that contain two suspension rods that are adjustable with respect to one another, whereby the distance A between the open false ceiling 2 and the concrete ceiling 3 can be easily adjusted.

Arrangements are also preferably made to fasten these fast hangers 6 to the supporting profiles 5, whereby for example grooves or holes are made at regular distances from one another in the supporting profiles 5.

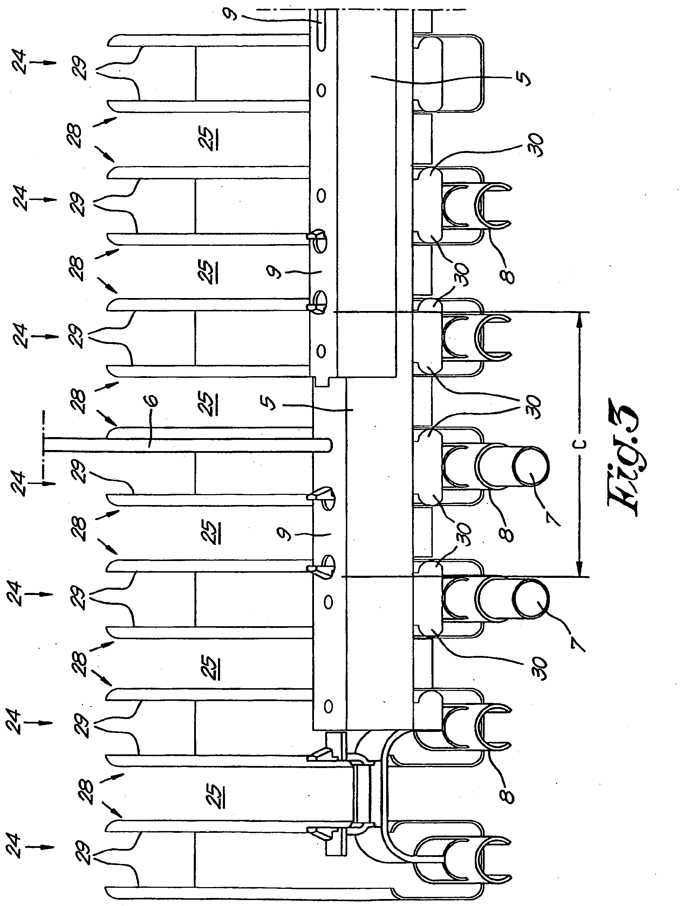

In the example shown in figure 3 these arrangements consist of elongated grooves that are constructed in the middle with a circular widening, for example.

However, other arrangements appropriate to the form of the means that are used to suspend the supporting structure are not excluded.

Hereby a number of supporting profiles 5 are fitted parallel to one another at a distance B from one another.

Moreover, the climate control system 1 is equipped with pipes 7 in which a fluid can flow to cool and/or heat the room 4.

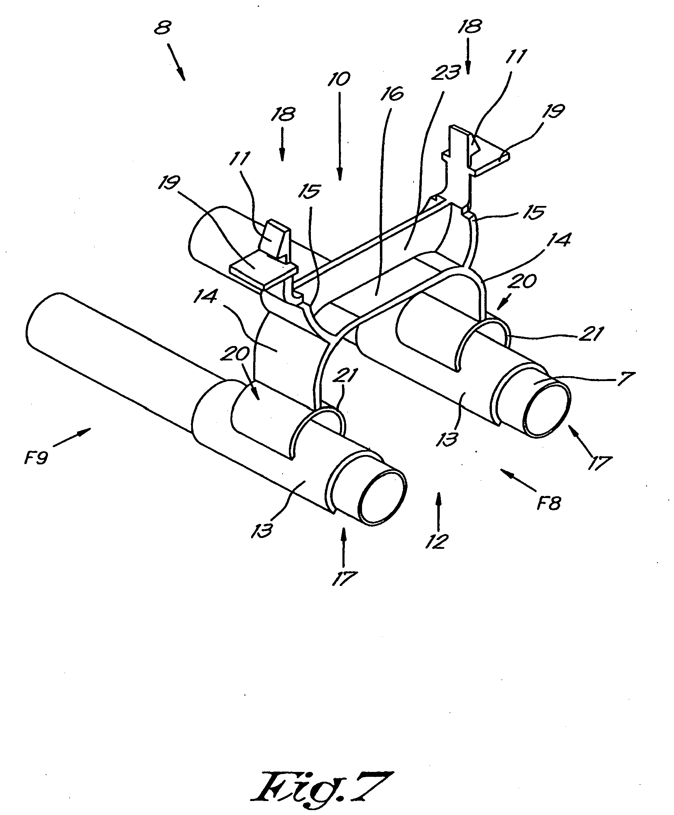

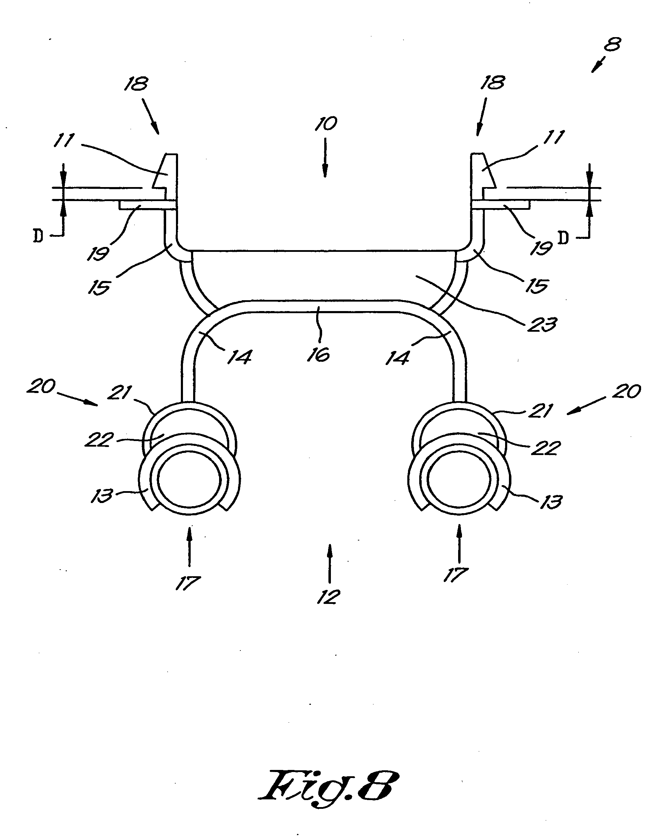

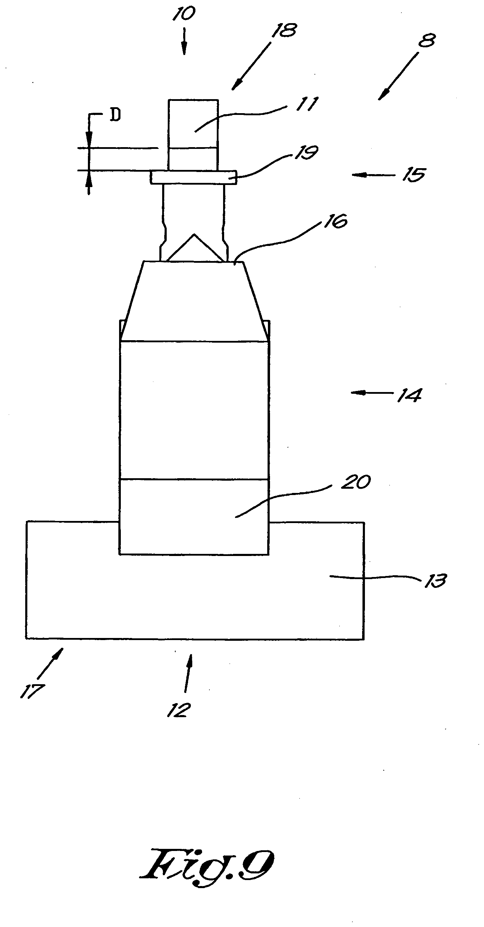

These pipes 7 are clamped using clamping means 8 to the supporting profiles 5 of the climate control system 1, and these clamping means 8 are shown in more detail in figures 7 to 9 inclusive.

To clamp the clamping means 8, grooves or holes 9 are provided in the supporting profiles 5 at regular distances C from one another, which for example is shown more clearly in figure 3.

The clamping means 8 themselves have a pair of hooks 11 opposite one another at one end 10, whereby the clamping means 8 can be snapped into such a groove or such a hole 9 or a pair of such grooves or holes 9 of the supporting profile 5

As in the example in figure 3, the grooves or holes for snapping the clamping means 8 onto the supporting profile 5 and holes or grooves for suspending the supporting structure are preferably applied alternately to the supporting profile 5.

At the other end 12 of the clamping means 8 there is a nearly semi-cylindrical pipe section 13 to clamp a pipe 7 in the clamping means 8.

In the embodiment discussed here the clamping means 8 consist of a pair of U-shaped clasps, respectively a first clasp 14 and a second clasp 15, whose backs 16 are connected together.

At each of the free ends 17 of the first clasp 14 there is an aforementioned semi-cylindrical pipe section 13 to snap in a pipe 7, while on each of the free ends 18 of the second clasp 15, there is one hook 11 of an aforementioned pair of opposing hooks 11 to snap the clamping means 8 into an aforementioned groove 9 in a supporting profile 5.

The hooks 11 are oriented towards the outside and at a certain distance D from each hook 11 in the direction of the back 16 there is an end-stop part 19, and these end-stop parts 19 are also oriented towards the outside, flat in shape and extend transversely on the U-shaped second clasp 15.

The distance D hereby corresponds to the thickness D of a supporting profile 5 at the location of the grooves or holes 9, and it is of course the intention that, after the hooks 11 have been snapped into a groove or hole 9 of a supporting profile 5, the end-stop parts 19 rest against the supporting profile 5 and thus prevent further movement of the clamping means 8 in the groove or hole 9.

Furthermore, it should be noted that in this case there are reinforcements 20 at the free ends 17 of the first clasp 14 at the location of the coupling with the semi-cylindrical pipe sections 13.

To this end, the ends 17 of the first clasp 14 lead to semi-cylindrical parts 21 that are connected to the backs of the semi-cylindrical pipe sections 13, whereby in each case there is also a partition 22 in the middle of these semi-cylindrical parts 21.

At the location of the back 16 of the second clasp 15 there is also a reinforcing plate 23.

It is clear that with the clamping means 8 described above, a pair of parallel pipes 7 can be clamped simultaneously to a supporting profile 5 of the climate control system 1.

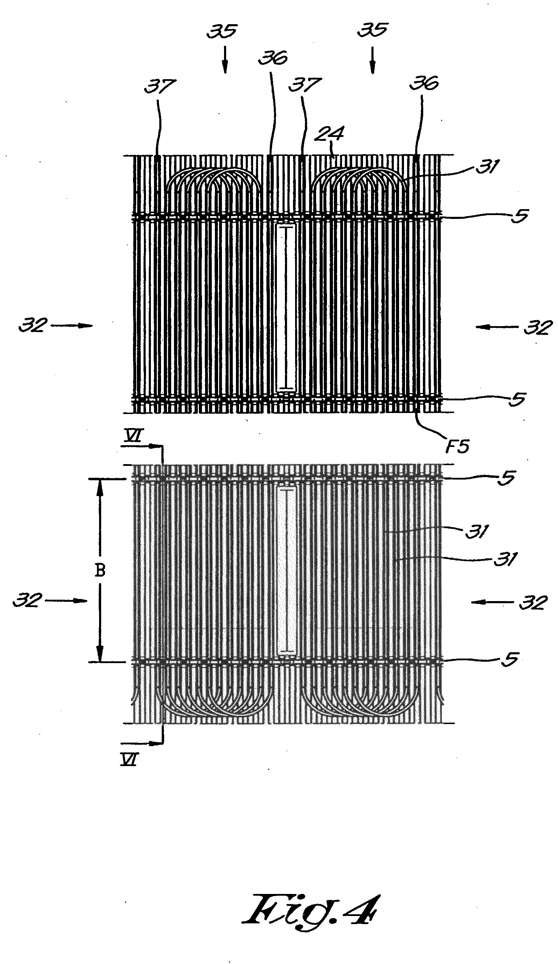

As is clearly shown in figure 4 the pipes 7 are preferably installed in loops on the supporting structure.

Finally, the open false ceiling 2 is finished by providing ceiling profiles 24 over the pipes 7 that are affixed parallel to one another transversely on the supporting profiles 5 of the supporting structure.

In each case an opening 25 is left between successive ceiling profiles 24 with a width E, so that an open false ceiling 2 is indeed obtained.

The ceiling profiles 24 have a U-shaped cross-section and they are formed by a base 26 that connects together two parallel sidewalls 27 of the ceiling profile 24.

The width F of the base 26 forms the width F of a ceiling profile 24.

The width E of the openings 25 between the ceiling profiles 24 is at least 40% of the width F of a ceiling profile 24.

This ensures that a sufficiently large convective airflow can occur between the part of the space 4 under the open false ceiling 2 and the part of the space 4 above the open false ceiling.

The sidewalls 27 of the ceiling profiles 24 are folded somewhat towards the inside at their free edges 28 to form a pair of hooks 29 oriented towards one another that extend over the length of the ceiling profile 24.

Moreover, the supporting profiles 5 of the supporting structure have pairs of projections 30 that are complementary to the aforementioned hooks 29 of the ceiling profiles 24, so that a ceiling profile 24 can be hooked onto a supporting profile 5 by bringing the hooks 29 over the projections 30.

This can be done, for example, by holding a ceiling profile 24 somewhat obliquely to hook a first hook 29 over a projection 30, after which, by tilting the ceiling profile 24, the second hook 29 of the ceiling profile 24 can be brought over the corresponding other projection 30.

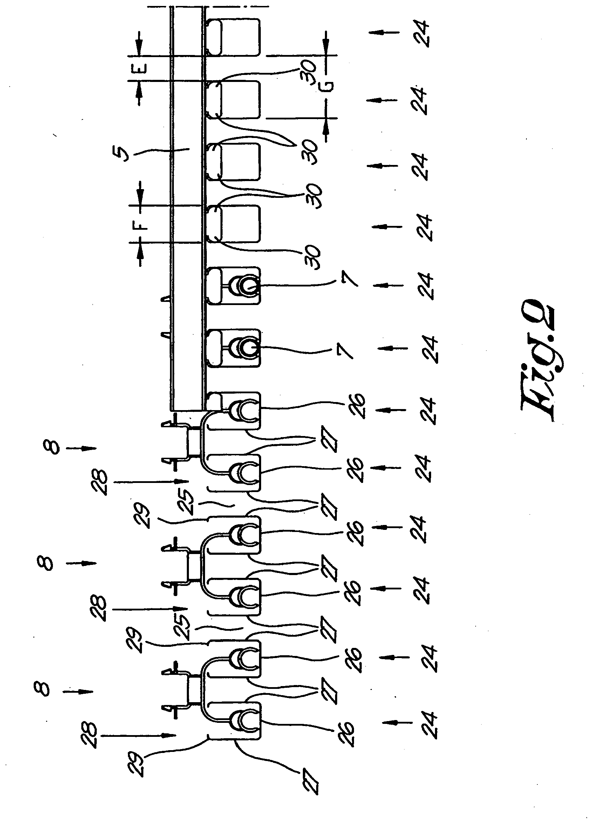

This is shown more clearly in figure 2 .

Hereby each supporting profile 5 of the supporting structure has a number of pairs of aforementioned projections 30 for hooking ceiling profiles 24, and which pairs of projections 30 are located at regular distances G from one another, in accordance with the distance G between successive ceiling profiles 24, and this distance G is thus the sum of the width F of a ceiling profile 24 and the width E of the interjacent opening 25.

As in this case the clamping means 8 are such that a pair of parallel pipes 7 can be clamped to a supporting profile 8 at the same time, it is sufficient to ensure that pairs of grooves or holes 9 are placed in each supporting profile 5 at regular distances C from one another that is twice the distance G between successive ceiling profiles 24.

Hereby each groove or hole 9 is located in the middle between the two projections 30 of an aforementioned pair of projections 30.

Thus when clamping a pair of pipes 7 to a supporting profile 5 with the clamping means 8, on either side of each pipe 7 there are a pair of projections 30 for snapping in a ceiling profile 24, so that all components of the climate control system 1 are attuned to one another.

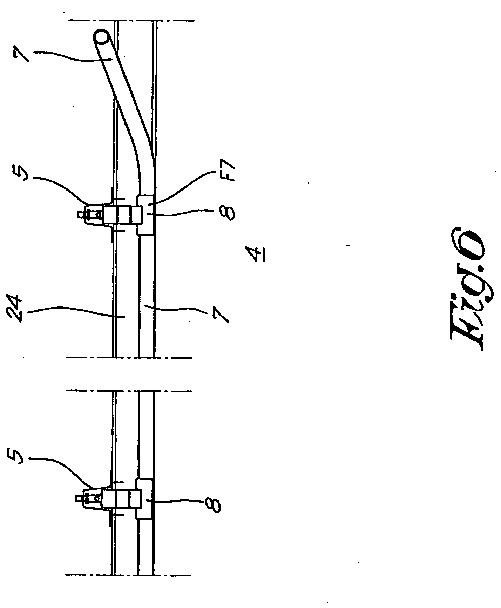

By fitting a number of ceiling profiles 24 next to one another in this way, an open false ceiling 2 is obtained, whereby the pipes 7 of the climate control system 1 are affixed between the sidewalls 27 of the ceiling profiles 24, except at places such as are clearly shown in figure 6 for example, where a pipe 7 goes from a first ceiling profile 24 to a second ceiling profile 24, and which ceiling profiles 24 are located at a certain lateral distance from one another.

The bases 26 of the ceiling profiles 24 form the visible part of the open false ceiling 2, whereby the bases 26 conceal the pipes 7.

Preferably the dimensions of the supporting profiles 5, the clamping means 8, the pipes 7 and the ceiling profiles 24 are also attuned to one another, such that, after affixing the ceiling profiles 24, the pipes 7 press against the base 26 of the ceiling profiles 24, except at places where such a pipe 7 goes from a first ceiling profile 24 to a second ceiling profile 24, and these ceiling profiles 24 are located at a certain lateral distance from one another.

In this way direct contact is obtained between the pipes 7 and the ceiling profiles 24, whereby due to thermal conduction the ceiling profiles 24 can quickly absorb heat from the pipes 7, when the fluid in these pipes 7 has to heat up the room 4, or conversely emit heat to these pipes 7 when the fluid 7 in the pipes has to cool the room 4.

Hereby the ceiling profiles 24 also act as a type of radiation panel for the pipes 7.

The ceiling profiles 24 are thus preferably made from good thermal conductors, preferably metal, for example typically of steel, but also copper, aluminium or similar are not excluded.

On account of safety, and in particular fire safety and for reasons relating to the strength of the structure, the supporting profiles 5 are preferably made of steel.

For the pipes 7, plastic pipes 7 are preferably used, as such pipes 7 offer sufficient flexibility, which is needed to be able to easily bend these pipes during the installation of them.

However, according to the invention the use of other materials is not excluded, and for example the pipes 7 can be made from a number of concentric layers.

The supporting profiles 5, and the clamping means 8, according to the invention are preferably made of metal, but other materials are not excluded.

An important advantage of a climate control system 1 according to the invention is that it is very energy-efficient, as due to the open structure of the false ceiling 2 both a convective heat transfer and the transfer of heat by radiation can take place.

When cooling a room the share of the convective flow can typically be around 35% of the total, while the heat transfer via radiation can constitute around 65% of the total.

When heating on the other hand, the heat transfer will typically be by 100% radiation, whereby an advantage of the climate control system 1 is that a heating temperature of the fluid in the pipes 7 can be chosen that is optimum for the effect to be achieved.

Another important advantage of the climate control system 1 according to the invention described above is that the same continuous pipe 7 can be fitted in a number of ceiling profiles 24 of the open ceiling 2, so that few, if any, connectors are needed to connect the pipes 7.

Preferably to this end successive loops 31 are formed with the pipes 7, as shown in figure 4.

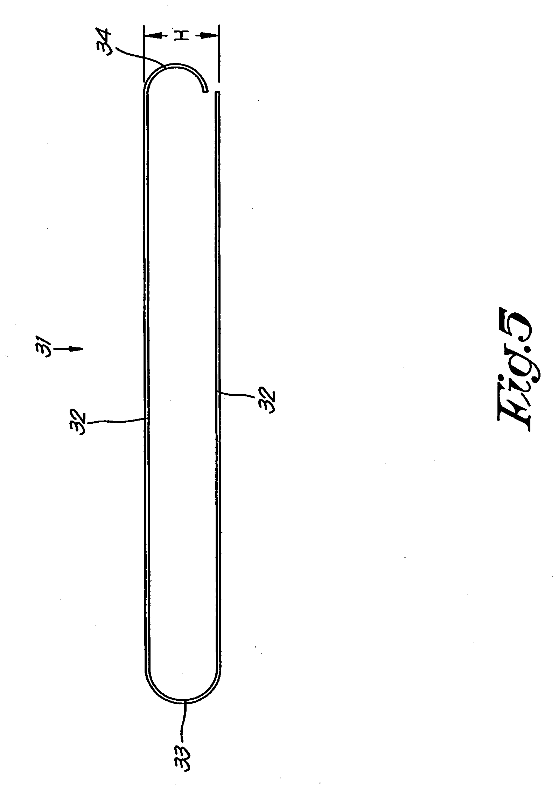

One such loop 31 is shown in figure 5.

Hereby such a loop 31 is preferably formed by two parallel pipe sections 32 that are fitted in a pair of ceiling profiles 24, which are situated at least a lateral distance H from one another that is greater than the distance G between two adjacent ceiling profiles 24 of the open false ceiling 2, and an interjacent pipe section 33 that connects these two parallel pipe sections 32, and which forms an angle of 180°.

In other words this distance H corresponds to the width H of a loop 31.

In the example shown in figure 4, the aforementioned lateral distance H between the two parallel pipe sections 32 of a loop 31, or in brief the width H of a loop 31, is six times the distance G between two adjacent ceiling profiles 24 of the open false ceiling 2.

However, other loop widths H are not excluded according to the invention.

Most loops 31 shown in figure 4 also have a pipe section 34 that forms a loop end 34 and which also makes a bend of 180° for connection to a subsequent loop 31.

In the example shown, successive loops 31 are each displaced over a lateral distance G with respect to one another, which corresponds to the distance G between adjacent ceiling profiles 24 of the open false ceiling 2.

However, according to the invention it is not excluded to install loops 31 that are each displaced over a lateral distance with respect to one another that is a multiple of the distance G. It is clear that with a pipe 7, in this way a circuit 35 can easily be formed that consists of a number of successive loops 31, and which spans a number of ceiling profiles 24 without connectors being required.

In the example shown, such a circuit 35 consists of six successive loops 31 that span twelve adjacent ceiling profiles 24.

It is clear that by selecting a larger or smaller distance H between the parallel pipe sections 32 of each loop 31, respectively more or fewer successive loops 31 can be formed to form a circuit 35.

A greater distance H provides the advantage that the interjacent sections 33 and the loop ends 34 can easily be bent into the shape of a hairpin bend of 180°, whereby the bend has a reasonably large bending radius.

In figure 4, each circuit 35 also has an input 36 and an output 37 that each can be connected to a subsequent circuit 35 or collectors, for example, for the supply and removal of fluid from the pipes.

As already set out in detail in the introduction, such a climate control system 1 according to the invention is highly suitable for the application of so-called night ventilation, as the air in the room 4 can freely flow through the openings 25 in the open false ceiling and thus can come into contact with the concrete ceiling.

In this way this concrete ceiling 3, which has a much higher heat capacity than air, can absorb heat from the air or emit heat to the air, such that a more energy-efficient climate control system 1 can be obtained.

Moreover it is clear that a climate control system according to the invention consists of a few simple components that can be adapted very flexibly to the room 4 in which the climate control system 1 has to be installed.

As a result the installation of it is also simple and few, if any, connectors are needed to connect the pipes together, such that, taken altogether, a climate control system 1 according to the invention is relatively cheap and more reliable than the known climate control systems 1.

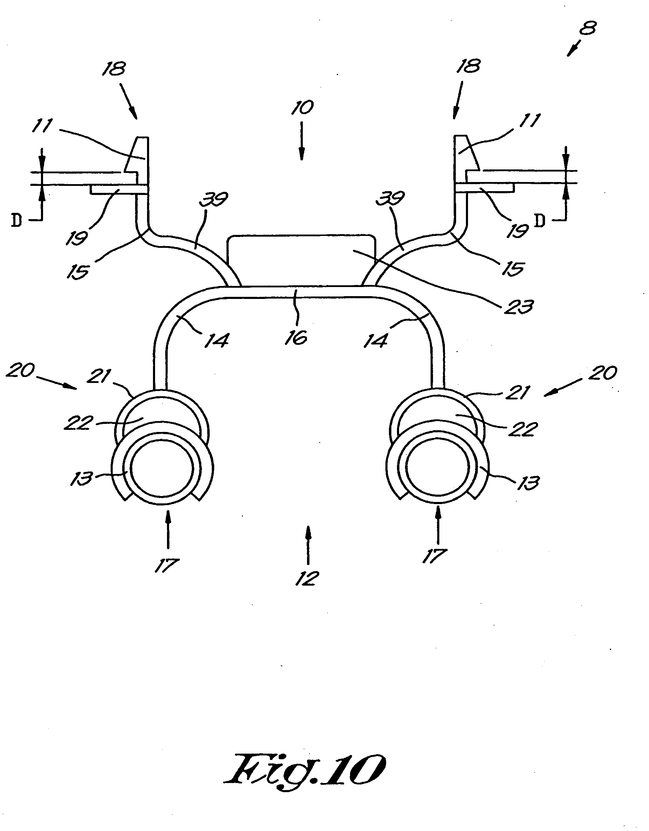

Figure 10 shows another preferred embodiment of the clamping means 8, whereby in this case greater flexibility is given to the clamping means 8 in the vertical direction, for example at the level of the connections 39 between the braces 14 and 15 and/or by the choice of the material.

The height of the clamping means 8 is preferably dimensioned such that the pipes 7 are pressed onto the base 26 of the ceiling profiles 24 with a certain force, for example due to the height being 0.5 mm greater than the situation in which the pipes 7 rest exactly on the aforementioned base 26.

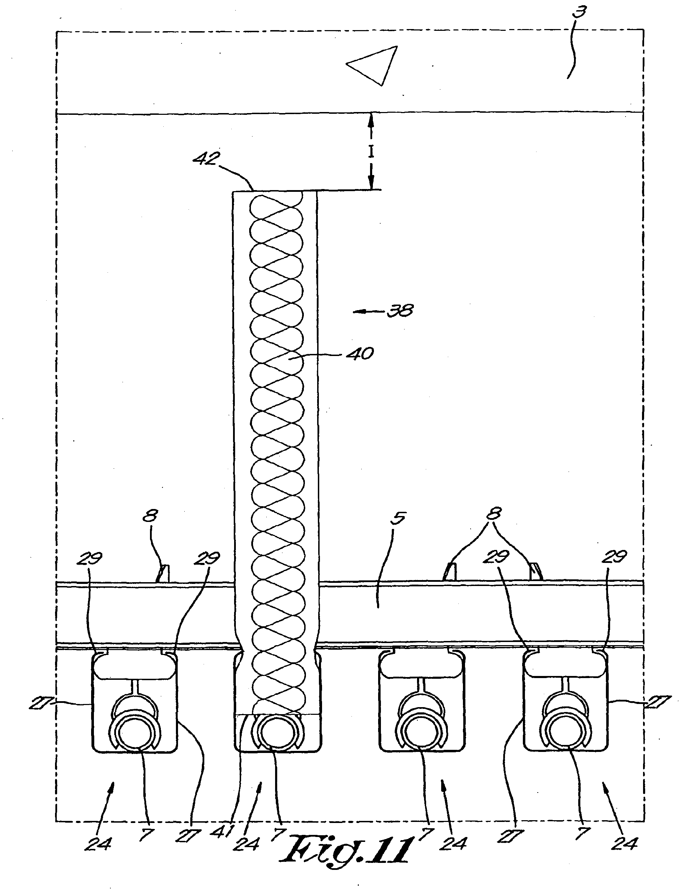

As shown in figures 1 and 11, for acoustic reasons it may be useful to fit sound insulation 38 of acoustic damping material at regular distances from one another above the open false ceiling 2, in order to counteract a possible reverberating effect.

This is indeed an important advantage of a climate control system 1 according to the invention, as the pipes 7 of the installation are fitted into the ceiling profiles 4 and the action of the climate control system 1 is thus not impeded in any way by the installation of sound insulation 38.

Thus, after installing sound insulation 38, the convective flow between the ceiling profiles 4 takes place unimpeded.

After installing the sound insulation 38, the air above the ceiling profiles 4 can still be flushed with air, for example, that comes from outside the building, if so desired.

This advantage is in sharp contrast to what is the case with existing known climate control systems, whereby it is generally very difficult or even impossible to obtain good sound absorbing properties.

According to a preferred embodiment of a climate control system according to the invention, the open false ceiling 2 is suspended from the ceiling 3 of the room in the building, and the sound insulation 38 consists of rectangular panels or mats 40 that are fitted with one side edge 41 between the sidewalls 27 of the ceiling profile 24 concerned.

Preferably the opposite side edge 42 of the panels or mats 40 extends a certain distance I from the ceiling 3 of the room 4, so that the flow of air above the open false ceiling 2 is impeded to a minimum.

In the embodiment shown, the sound insulation 38 consists of semirigid rockwool mats 40 that are packed in a PE foil, and which are fitted in a ceiling profile 24 without a reinforcing frame.

The mats 40 are clamped into the ceiling profile 24 concerned between the aforementioned pair of hooks 29 oriented towards one another that extend over the length of the ceiling profile 24.

It is also important to note that a climate control system 1 according to the invention presents all the advantages of the known closed false ceilings, whereby an acoustic absorption effect can be realised, lighting can be fitted in or on the ceiling, and walls or similar can be provided at will below the ceiling without disturbing the action of the climate control system 1.

In summary it can be said that a climate control system 1 according to the invention combines many advantages, i.e. the advantage that it is easy to install, whereby great energy efficiency is obtained with respect to the known climate systems, and whereby changes can be made in a very flexible way, such as the installation of other elements such as lighting and/or acoustic absorbing elements and similar.

## Claims

1. Climate control system (1) including a false ceiling (2) of a room (4) in a building, a supporting structure with supporting profiles (5), and continuous pipes (7) in which a fluid can flow to cool and/or heat the room (4), wherein the false ceiling (2) is an open false ceiling (2) that consists of ceiling profiles (24) that are fitted in parallel next to one another transversely on the supporting profiles (5), whereby an opening (25) is left between successive ceiling profiles (24) each time, whereby these ceiling profiles (24) have a U-shaped cross-section formed by a base (26) that connects two parallel sidewalls (27) of the ceiling profile (24) together, whereby the pipes (7) of the climate control system (1) are fitted between the sidewalls (27) of the ceiling profiles (24), except at the places where such a pipe (7) passes from a first ceiling profile (24) to a second ceiling profile (24), and these ceiling profiles (24) are situated at a certain lateral distance (H) from one another, **wherein** the climate control system (1) has clamping means (8) for directly clamping one of the continuous pipes (7) to one of the supporting profiles (5) after which the pipe (7) can be covered by ceiling profiles (24) and in that the same continuous pipe (7) is fitted in a number of ceiling profiles (24) of the open ceiling (2); **characterized in that** the openings (25) have a width (E) and the ceiling profiles (24) have a width (F) whereby the width E of an opening (25) is at least 40% of the width (F) of a ceiling profile (24).

2. Climate control system (1) according to claim 1, **characterised in that** the pipes (7) are fitted against the base (26) of the ceiling profiles (24), except at places where such a pipe (7) passes from a first ceiling profile (24) to a second ceiling profile (24), and these ceiling profiles (24) are located at a certain lateral distance (H) from one another.

3. Climate control system (1) according to any of the previous claims, **characterised in that** said continuous pipes (7) are installed in successive loops (31) in the ceiling profiles (24), whereby such a loop (31) is at least formed by two parallel pipe sections (32) affixed in a pair of ceiling profiles (24) that are at least a lateral distance (H) from one another that is greater than the distance (G) between two adjacent ceiling profiles (24) of the open false ceiling (2); an interjacent pipe section (33) that connects these two parallel pipe sections (32) and also makes an angle of 180°, and whereby at least one loop has a pipe section (34) that forms a loop end (34), and which also makes a bend of 180° for connection to a subsequent loop (31).

4. Climate control system (1) according to claim 3, **characterised in that** successive loops (31) are each displaced over a lateral distance (G) with respect to one another that corresponds to the distance (G) between adjacent ceiling profiles (24) or a multiple thereof.

5. Climate control system (1) according to any of the previous claims, **characterised in that** one end (12) of the clamping means (8) has a nearly semi-cylindrical pipe section (13) for clamping a pipe (7) in the clamping means (8).

6. Climate control system (1) according to claim 5, **characterised in that** one supporting profile of said supporting profiles (5) has a groove or hole (9), and one end (10) of the clamping means (8) has a pair of opposing hooks (11) for snapping the clamping means (8) into an aforementioned groove or hole (9) of said supporting profile (5) or into a pair of aforementioned grooves or holes (9).

7. Climate control system (1) according to claims 5 and 6, **characterised in that** the clamping means (8) consists of a pair of U-shaped clasps, respectively a first clasp (14) and a second clasp (15), whose backs (16) are connected together, whereby each free end (17) of the first clasp (14) has an aforementioned semi-cylindrical pipe section (13) for snapping in a pipe (7), while at each free end (18) of the second clasp (15) there is one hook (11) of an aforementioned pair of opposing hooks (11) for snapping the clamping means (8) into an aforementioned groove or aforementioned hole (9) or in a pair of aforementioned grooves or holes (9) in one of said supporting profiles (5).

8. Climate control system (1) according to any of the previous claims, **characterised in that** the sidewalls (27) of the ceiling profiles (24) at their free edges (28) are somewhat folded towards the inside to form a pair of hooks (29) oriented towards one another that extend over the length of the ceiling profile (24), and whereby one of then supporting profiles (5) of the supporting structure has a pair of projections (30) that are complementary to the aforementioned hooks (29) in order to be able to hook a ceiling profile (24) onto said supporting profile (5).

9. Climate control system (1) according to claims 7 and 8, **characterised in that** each of the supporting profiles (5) of the supporting structure has a number of pairs of aforementioned projections (30) for hooking on ceiling profiles (24), and these pairs of projections (30) are located at regular distances (G) from one another, whereby each of the supporting profiles (5) also has a plurality of grooves or holes (9) for snapping in clasp-shaped clamping means (8), and these grooves or holes (9) are located at regular distances from one another and whereby a groove or hole (9) is located in the middle between two projections (30) of such a pair of aforementioned projections (30).

10. Climate control system (1) according to any of the previous claims, **characterised in that** above the open false ceiling (2) sound insulation (38) of acoustic damping material is fitted at regular distances from one another, in such a way that a convective flow between the ceiling profiles (4) can take place unimpeded and the air above the ceiling profiles (4) can be flushed with air from outside the building.

11. Climate control system (1) according to claim 10, **characterised in that** the open false ceiling (2) is suspended from the ceiling (3) of the room (4) and the sound insulation (38) consists of rectangular panels or mats that are installed with one side edge (41) between the sidewalls (27) of the ceiling profiles (24) concerned.

12. Climate control system (1) according to claim 10 or 11, **characterised in that** the sound insulation (38) consists of semirigid rockwool mats (40) that are packed in a PE foil, and which are installed in each of said ceiling profiles (24) without a reinforcing frame.

13. Climate control system (1) according to claim 11 or 12, **characterised in that** the opposite side edge (42) of the panels or mats (40) of sound insulation (38) extend a certain distance (I) from the ceiling (3) of the room (4).

14. Climate control system (1) according to claims 8 and 11, **characterised in that** the aforementioned panels or mats (40) of the sound insulation (38) are clamped into one of the ceiling profiles (24) concerned between the aforementioned pair of hooks (29) oriented towards one another that extend over the length of said ceiling profile (24).

## Patentansprüche

1. Klimatisierungssystem (1), beinhaltend eine Zwischendecke (2) eines Raums (4) in einem Gebäude, eine Tragstruktur mit Stützprofilen (5), und durchlaufende Rohre (7), worin eine Flüssigkeit strömen kann, um den Raum (4) zu kühlen und/oder zu heizen, wobei die Zwischendecke (2) eine offene Zwischendecke (2) ist, die aus Deckenprofilen (24) besteht, die parallel nebeneinander quer an den Stützprofilen (5) angebracht sind, wobei zwischen aufeinanderfolgenden Deckenprofilen (24) jedesmal eine Öffnung (25) belassen ist, wobei diese Deckenprofile (24) einen U-förmigen Querschnitt haben, gebildet durch eine Basis (26), die zwei parallele Seitenwände (27) des Deckenprofils (24) miteinander verbindet, wobei die Rohre (7) des Klimatisierungssystems (1) zwischen den Seitenwänden (27) der Deckenprofile (24) angebracht sind, außer an den Stellen, wo ein solches Rohr (7) von einem ersten Deckenprofii (24) auf ein zweites Deckenprofil (24) übergeht, und diese Deckenprofile (24) sich in einem gewissen seitlichen Abstand (H) voneinander befinden, worin das Klimatisierungssystem (1) Klemmmittel (8) aufweist, um eines der durchlaufenden Rohre (7) direkt an einem der Stützprofile (5) festzuklemmen, wonach das Rohr (7) mit Deckenprofilen (24) abgedeckt werden kann, und **dass** dasselbe durchlaufende Rohr (7) in einer Anzahl von Deckenprofilen (24) der offenen Decke (2) angebracht ist, **dadurch gekennzeichnet, dass** die Öffnungen (25) eine Breite (E) aufweisen und die Deckenprofile (24) eine Breite (F) aufweisen, wobei die Breite E einer Öffnung (25) mindestens 40% der Breite (F) eines Deckenprofils (24) beträgt.

2. Klimatisierungssystem (1) nach Anspruch 1, **dadurch gekennzeichnet, dass** die Rohre (7) gegen die Basis (26) der Deckenprofile (24) angebracht werden, außer an den Stellen, wo ein solches Rohr (7) von einem ersten Deckenprofil (24) auf ein zweites Deckenprofil (24) übergeht, und diese Deckenprofile (24) sich in einem gewissen seitlichen Abstand (H) voneinander befinden.

3. Klimatisierungssystem (1) nach einem der vorhergehenden Ansprüche, **dadurch gekennzeichnet, dass** die durchlaufenden Rohre (7) in aufeinanderfolgenden Schlaufen (31) in den Deckenprofilen (24) verlegt werden, wobei eine solche Schlaufe (31) mindestens durch zwei parallele Rohrabschnitte (32) gebildet wird, die in einem Paar Deckenprofile (24) angebracht sind, die sich mindestens in einem seitlichen Abstand (H) voneinander befinden, der größer als der Abstand (G) zwischen zwei benachbarten Deckenprofilen (24) der offenen Zwischendecke (2) ist; ein zwischenliegendes Rohrteil (33), das diese zwei parallelen Rohrabschnitte (32) verbindet und auch einen Winkel von 180° beschreibt, und wobei mindestens eine Schlaufe einen Rohrabschnitt (34) aufweist, der ein Schlaufenende (34) bildet und der auch eine Kurve von 180° zum Anschluss an eine folgende Schlaufe (31) bildet.

4. Klimatisierungssystem (1) nach Anspruch 3, **dadurch gekennzeichnet, dass** aufeinanderfolgende Schlaufen (31) jede in Bezug zueinander über einen seitlichen Abstand (G) verschoben sind, der dem Abstand (G) zwischen benachbarten Deckenprofilen (24) oder einem Vielfachen davon entspricht.

5. Klimatisierungssystem (1) nach einem der vorhergehenden Ansprüche, **dadurch gekennzeichnet, dass** ein Ende (12) der Klemmmittel (8) einen nahezu halbzylindrtschen Rohrabschnitt (13) zum Festklemmen eines Rohrs (7) in den Kiemmmitteln (8) aufweist.

6. Klimatisierungssystem (1) nach Anspruch 5, **dadurch gekennzeichnet, dass** ein Stützprofil der besagten Stützprofile (5) eine Nut oder Öffnung (9) aufweist und ein Ende (10) der Klemmmittel (8) ein Paar gegenüberliegender Haken (11) zum Einrasten der Klemmmittel (8) in eine vorgenannte Nut oder Öffnung (9) des Stützprofils (5) oder in ein Paar der vorgenannten Nuten oder Öffnungen (9) aufweist.

7. Klimatisierungssystem (1) nach den Ansprüchen 5 und 6, **dadurch gekennzeichnet, dass** die Klemmmittel (8) aus einem Paar U-förmiger Bügel, einem ersten Bügel (14) beziehungsweise einem zweiten Bügel (15), bestehen, deren Rücken (16) miteinander verbunden sind, wobei jedes freie Ende (17) des ersten Bügels (14) einen vorgenannten halbzylindrischen Rohrabschnitt (13) zum Einrasten eines Rohrs (7) aufweist, während an jedem freien Ende (18) des zweiten Bügels (15) ein Haken (11) eines vorgenannten Paars gegenüberliegender Haken (11) vorgesehen ist, zum Einrasten der Klemmmittel (8) in eine vorgenannte Nut oder vorgenannte Öffnung (9) oder in ein Paar der vorgenannten Nuten oder Löcher (9) in einem der Stützprofile (5).

8. Klimatisierungssystem (1) nach einem der vorhergehenden Ansprüche, **dadurch gekennzeichnet, dass** die Seitenwände (27) der Deckenprofile (24) an ihren freien Rändern (28) etwas nach innen gefaltet sind, um ein Paar zueinander gerichteter Haken (29) zu bilden, die sich über die Länge des Deckenprofils (24) erstrecken, und wobei eines der Stützprofile (5) der Tragstruktur ein Paar Vorsprünge (30) aufweist, die komplementär zu den vorgenannten Haken (29) sind, um ein Deckenprofil (24) an dem Stützprofil (5) festhaken zu können.

9. Klimatisierungssystem (1) nach den Ansprüchen 7 und 8, **dadurch gekennzeichnet, dass** jedes der Stützprofile (5) der Tragstruktur eine Anzahl von Paaren der vorgenannten Vorsprünge (30) zum Einhaken von Deckenprofilen (24) aufweist und diese Paare von Vorsprüngen (30) sich in regelmäßigen Abständen (G) voneinander befinden, wobei jedes der Stützprofile (5) auch eine Vielzahl von Nuten oder Öffnungen (9) zum Einrasten von bügelförmigen Klemmmitteln (8) aufweist und diese Nuten oder Öffnungen (9) sich in regelmäßigen Abständen voneinander befinden, und wobei eine Nut oder Öffnung (9) sich in der Mitte zwischen zwei Vorsprüngen (30) eines solchen Paars vorgenannter Vorsprünge (30) befindet.

10. Klimatisierungssystem (1) nach einem der vorhergehenden Ansprüche, **dadurch gekennzeichnet, dass** über der offenen Zwischendecke (2) Geräuschisolation (38) aus akustischem Dämmmaterial in regelmäßigen Abständen voneinander angebracht ist, derart, dass eine Konvektionsströmung zwischen den Deckenprofiten (4) unbehindert stattfinden kann und die Luft über den Deckenprofiten (4) mit Luft von außerhalb des Gebäudes gespült werden kann.

11. Klimatisierungssystem (1) nach Anspruch 10, **dadurch gekennzeichnet, dass** die offene Zwischendecke (2) von der Decke (3) des Raums (4) abgehängt ist und die Geräuschisolation (38) aus rechteckigen Paneelen oder Matten besteht, die mit einer Seitenkante (41) zwischen den Seitenwänden (27) der betreffenden Deckenprofile (24) installiert sind.

12. Klimatisierungssystem (1) nach Anspruch 10 oder 11, **dadurch gekennzeichnet, dass** die Geräuschisolation (38) aus halbstarren Steinwollematten (40) besteht, die in eine PE-Folie verpackt sind und die in jedem der Deckenprofile (24) ohne einen Verstärkungsrahmen installiert werden.

13. Klimatisierungssystem (1) nach Anspruch 11 oder 12, **dadurch gekennzeichnet, dass** die gegenüberliegende Seitenkante (42) der Paneele oder Matten (40) der Geräuschisolation (38) sich über einen gewissen Abstand (I) von der Decke (3) des Raums (4) erstrecken.

14. Klimatisierungssystem (1) nach Anspruch 8 und 11, **dadurch gekennzeichnet, dass** die vorgenannten Paneele oder Matten (40) der Geräuschisolatton (38) zwischen dem vorgenannten Paar zueinander gerichteter Haken (29), die sich über die Länge des Deckenprofils (24) erstrecken, in eines der betreffenden Deckenprofile (24) festgekiemmt werden.

## Revendications

1. Un système de climatisation (1) comprenant un faux plafond (2) d'un local (4) dans un bâtiment, une structure de support avec des profilés porteurs (5) et des tubes continus (7) dans lesquels un fluide peut s'écouler afin de refroidir et/ou chauffer le local (4), dans lequel le faux plafond (2) est un faux plafond (2) ouvert constitué de profilés de plafond (24) qui sont installés parallèlement l'un à côté de l'autre, perpendiculairement aux profilés porteurs (5) d'une structure portante, de sorte que, entre des profilés de plafond (24) successifs, une ouverture (25) est chaque fois laissée, ces profilés de plafond (24) ayant une section en U formée par un fond (26) qui relie entre elles deux parois latérales parallèles (27) du profilé de plafond (24), les tubes (7) du système de climatisation (1) étant installés entre les parois latérales (27) des profilés de plafond (24), sauf aux endroits où un tel tube (7) passe d'un premier profilé de plafond (24) à un second profilé de plafond (24), lesquels profilés de plafond (24) étant situés à une certaine distance latérale (H) l'un de l'autre, dans lequel le système de climatisation (1) étant pourvu de dispositifs de serrage (8) pour directement fixer un des tubes continus (7) à un des profilés porteurs (5), après lequel le tube continu (7) peut être couvert de profilés de plafond (24) et en ce qu'un même tube (7) continu est installé dans plusieurs profilés de plafond (24) du faux plafond (2) ouvert; **caractérisé en ce que** les ouvertures (25) ont une largeur (E) et les profilés de plafond (24) une largeur (F) où la largeur (E) d'une ouverture (25) atteint au moins 40% de la largeur (F) d'un profilé de plafond (24).

2. Un système de climatisation (1) selon les revendications 1, **caractérisé en ce que** les tubes (7) sont installés contre le fond (26) des profilés de plafond (24), sauf aux endroits où un tel tube (7) passe d'un premier profilé de plafond (24} à un second profilé de plafond (24), lesquels profilés de plafond (24) étant situés à une certaine distance latérale (H) l'un de l'autre.

3. Un système de climatisation (1) selon l'une des revendications précédentes, **caractérisé en ce que** les tubes continus dits (7) sont installés en boucles (31) successives dans les profilés de plafond (24), chacune de ces boucles (31) étant au moins formée de deux sections tubulaires parallèles (32) installées dans une paire de profilés de plafond (24) qui se trouvent au moins à une distance latérale (H) l'un de l'autre supérieure à la distance (G) entre deux profilés de plafond (24) contigus du faux plafond (2) ouvert ; une section tubulaire intermédiaire (33) relie ces deux sections tubulaires parallèles (32) et fait un angle de 180°, au moins une boucle ayant une section tubulaire (34) formant une extrémité de boucle (34) et faisant également un coude à 180° pour la jonction à une boucle (31) suivante.

4. Un système de climatisation (1) selon la revendication 4, **caractérisé en ce que** des boucles (31) successives selon l'invention sont chaque fois décalées d'une distance latérale (G) l'une par rapport à l'autre qui correspond à la distance (G) entre des profilés de plafond (24) contigus ou à un multiple de celle-ci.

5. Un système de climatisation (1) selon l'une des revendications précédentes, **caractérisé en ce que** les dispositifs de serrage (8) sont pourvus à une extrémité (12) d'une section tubulaire quasiment demi-cylindrique (13) pour fixer un tube (7) dans ces dispositifs de serrage (8).

6. Un système de climatisation (1) selon la revendication 5, **caractérisé en ce qu'**un profilé porteur (5) des profilés porteurs dits (5) est pourvu d'une rainure ou d'un trou (9) et **en ce que** les dispositifs de serrage (8) sont munis à une extrémité (10) d'une paire de crochets (11) opposés pour encliqueter les dispositifs de serrage (8) dans une rainure ou un trou (9) du profilé porteur (5) susdit ou dans une paire de rainures ou trous (9).

7. Un système de climatisation (1) selon les revendications 5 et 6, **caractérisé en ce que** les dispositifs de serrage (8) sont constitués d'une paire d'étriers en U, respectivement un premier étrier (14) et un deuxième étrier (15), dont les dos (16) sont reliés l'un à l'autre, une section tubulaire demi-cylindrique (13) susdite étant prévue pour encliqueter sur chacune des extrémités libres (17) du premier étrier (14) un tube (7), tandis que sur chacune des extrémités libres (18) du deuxième étrier (15), un crochet (11) d'une paire susdite de crochets (11) opposés est prévu pour encliqueter les dispositifs de serrage (8) dans la rainure susdite ou le trou susdit (9) ou dans une paire de rainures ou trous (9) susdits d'un des profilés porteurs (5) susdits.

8. Un système de climatisation (1) selon l'une des revendications précédentes, **caractérisé en ce que** les parois latérales (27) des profilés de plafond (24) sont légèrement pliées vers l'intérieur sur leurs bords libres (28) pour former une paire de crochets (29) orientés l'un vers l'autre, qui s'étendent sur la longueur du profilé de plafond (24) et un profilé porteur (5) de la structure portante est pourvu d'une paire de protubérances (30) qui sont complémentaires aux crochets (29) susdits afin de pouvoir accrocher un profilé de plafond (24) à un profilé porteur (5).

9. Un système de climatisation (1) selon les revendications 7 et 8, **caractérisé en ce que** chacun des profilés porteurs (5) de la structure portante est pourvu de plusieurs paires des protubérances (30) susdites pour accrocher les profilés de plafond (24), lesquelles paires de protubérances (30} sont situées à une distance régulière (G) l'une de l'autre, chacun des profilés porteurs (5) étant également pourvu de plusieurs rainures ou trous (9) pour encliqueter des dispositifs de serrage (8) en forme d'étrier, lesquels rainures ou trous (9) étant situés à intervalles réguliers, une rainure ou un trou (9) étant situé au milieu de deux protubérances (30) de la paire susdite de protubérances (30).

10. Un système de climatisation (1) selon l'une des revendications précédentes, **caractérisé en ce qu'**au- dessus du faux plafond (2) ouvert sont installés à intervalles réguliers l'un de l'autre des isolants acoustiques (38) constitués d'une matière qui atténue les bruits, d'une manière telle qu'un écoulement convectif peut se dérouler sans entrave entre les profilés de plafond (4) et que l'air situé au-dessus des profilés de plafond (4) peut être balayé par de l'air provenant de l'extérieur du bâtiment.

11. Un système de climatisation (1) selon la revendication 10, **caractérisé en ce que** le faux plafond (2) ouvert est suspendu au plafond (3) du local (4) et **en ce que** les isolants acoustiques (38) sont constitués de plaques ou nattes installées avec un bord latéral (41) entre les parois latérales (27) des profilés de plafond (24) concernés, le bord latéral opposé des plaques s'étendant à une certaine distance du plafond (3) du local (4).

12. Un système de climatisation (1) selon les revendications 10 ou 11, **caractérisé en ce que** l'isolation acoustique (38) consiste de nattes (40) semi-rigides en laine minérale emballées dans une lame de PE, et qui sont installées dans chacun des profilés de plafond (24) susdits sans cadre de renforcement.

13. Un système de climatisation (1) selon la revendication 11 ou 12, **caractérisé en ce que** le bord latéral opposé (42) des plaques ou nattes (40) isolants acoustiques (38) s'étendent à une certaine distance (I) du plafond (3) du local (4) .

14. Un système de climatisation (1) selon la revendication 8 et 11, **caractérisé en ce que** les plaques ou nattes (40) susdites d'isolant acoustique (38) sont coincées dans un des profilés de plafond (24) concerné entre la paire susdite de crochets (29) orientés l'un vers l'autre, qui s'étendent sur la longueur du profilé de plafond (24).
